**Europäisches Patentamt**

**European Patent Office**

**Office européen des brevets**

(19)

(11) Veröffentlichungsnummer : **0 349 841 B1**

(12) **EUROPÄISCHE PATENTSCHRIFT**

(45) Veröffentlichungstag der Patentschrift :
**15.01.92 Patentblatt 92/03**

(51) Int. Cl.⁵ : **A23G 3/00, B65D 85/60**

(21) Anmeldenummer : **89111353.2**

(22) Anmeldetag : **22.06.89**

(54) **Bonbon-Spielzeug.**

(30) Priorität : **30.06.88 DE 8808355 U**

(43) Veröffentlichungstag der Anmeldung :
**10.01.90 Patentblatt 90/02**

(45) Bekanntmachung des Hinweises auf die
Patenterteilung :
**15.01.92 Patentblatt 92/03**

(84) Benannte Vertragsstaaten :
**AT BE CH DE ES FR GB GR IT LI LU NL SE**

(56) Entgegenhaltungen :
**FR-A- 2 361 821**
**FR-A- 2 586 009**

(56) Entgegenhaltungen :
**GB-A- 370 006**
**US-A- 2 160 730**
**US-A- 4 068 007**
**US-A- 4 560 562**

(73) Patentinhaber : **Mederer GmbH**
**Oststrasse 94**
**W-8510 Fürth (DE)**

(72) Erfinder : **Mederer, Herbert**
**Sperberstrasse 24a**
**W-8510 Fürth/Bayern (DE)**

(74) Vertreter : **Hafner, Dieter, Dr.rer.nat.,**
**Dipl.-Phys.**
**Ostendstrasse 132**
**W-8500 Nürnberg 30 (DE)**

EP 0 349 841 B1

**Beschreibung**

Die Erfindung/Neuerung betrifft ein Bonbon-Spielzeug, insbesondere aus Schaumzuckermasse und Fruchtgummi.

Bonbons mit einer Mischung aus unterschiedlichen Bonbonmassen, von denen eine Fruchtgummi- und die andere Schaumzuckermasse ist, sind bekannt. Beispielsweise werden auf flächenartigen Fruchtgummigießbonbons Ornamente oder Verzierungen aus Schaumzucker aufgebracht, in Umkehrung dazu gibt es großflächige Schaumzuckermassen-Bonbons, die mit Fruchtgummi-Applikationen versehen sind. Beim Stand der Technik ist entweder die Schaumzuckermasse auf die Fruchtgummimasse aufgegossen oder umgekehrt.

Der Erfindung/Neuerung liegt die Aufgabe zugrunde, ein Bonbon, das mindestens Schaumzuckermasse und Fruchtgummimasse aufweist, derart weiterzubilden, daß sich nicht nur erweiterte geschmackliche Varianten ergeben, sondern insbesondere Kinder zum Spielen mit einem derartigen Bonbon angeregt werden und sich gute Spielmöglichkeiten ergeben. Diese Aufgabe wird durch die kennzeichnenden Merkmale des Anspruches 1 gelöst, vorteilhafte Weiterbildungen ergeben sich aus den Unteransprüchen.

Als Kern der Erfindung/Neuerung wird es angesehen, daß das Bonbon-Spielzeug aus mindestens drei gesonderten Lagen von Schaumzuckermasse oder Fruchtgummimasse besteht, wobei die oberste und die unterste Lage jeweils aus einem Schaumzuckerkörper mit abgerundeter Form mit porösen Oberflächen und flachem Querschnitt gebildet werden und die mindestens eine dazwischenliegende Lage aus Fruchtgummi scheibenförmig oder stabförmig ausgebildet ist. Dadurch ergibt sich gleichsam eine Nachbildung eines wie auch immer belegten Brötchens, wobei der Belag aus Fruchtgummi beispielsweise eine Fleisch- und Käsescheibe sowie ein Salatblatt imitieren soll, wodurch sich ein Cheeseburger ergibt, oder bei stäbchenförmiger Ausbildung des Belages ein Hotdog-Imitat gebildet wird. Die Einzelteile sind vorzugsweise nicht fest miteinander verbunden, so daß das spielende Kind die Möglichkeit hat, die Brötchenimitate neu zu belegen, teilweise die Beilagen zu verzehren und Teile der Beilagen beispielsweise in einer Puppenküche o.dgl. zu verwerten. Die Einzelteile sind farblich so abgestimmt, daß die Farben denen der "echten Vorbilder" entsprechen, beispielsweise ist eine imitierte Fleischscheibe dunkelrot, ein Salatblatt grün, ein Würstchen braunrot, eine Käsescheibe gelb pp.

Um das Gesamtbonbon (bestehend aus mehreren Teilen, die voneinander vorzugsweise losgelöst sind) in Form zu halten, ist eine äußere Umhüllung 10 vorgesehen, die transparent sein soll und aus verschweißter Klarsichtfolie besteht. Dadurch werden die "Brötchenteile" mit ihren Schnittflächen aneinandergedrückt und klemmen die Zwischenlagen fest, so daß sich bis zum Öffnen der Klarsichtfolie ein einheitliches Bonbon-Spielzeug ergibt.

Ansprüche 5-8 betreffen unterschiedliche Ausbildungen von Zwischenlagen, durch deren besondere Ausgestaltung der Spielzweck erhöht wird.

Durch Anspruch 10 wird in vorteilhafter Weise erreicht, daß das Bonbon-Spielzeug sicher und dekorativ auf eine flache Unterlage gestellt, beispielsweise in einem Kinderkaufladen ausgestellt werden kann.

Die Erfindung ist anhand vorteilhafter Ausführungsbeispiele in den Zeichnungsfiguren näher erläutert. Diese zeigen :

Fig. 1      eine schematische Darstellung eines Bonbon-Spielzeuges (Hotdog) ;

Fig. 2      eine schematische Darstellung (Seitenansicht) eines Bonbon-Spielzeuges in Form eines Cheeseburgers ;

Fig. 2a     eine Detailansicht einer Lage (Salatblattlage) ;

Fig. 3      eine Draufsicht auf ein Bonbon-Spielzeug einer weiteren Ausgestaltung (Fischbrötchen) ;

Fig. 4      eine Draufsicht auf ein Bonbon-Spielzeug einer weiteren Ausgestaltung (Club-Sandwich).

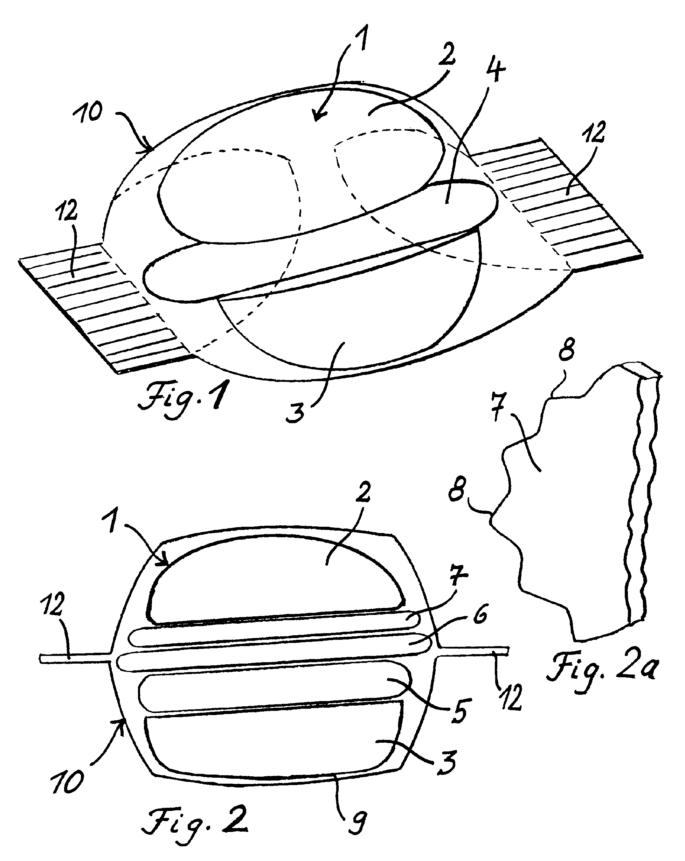

Das in Fig. 1 dargestellte Bonbon-Spielzeug 1 besteht i.w. aus drei Lagen, nämlich einer obersten Lage 2, einer untersten Lage 3 sowie einer dazwischenliegenden Lage 4. Die oberste und unterste Lage besteht jeweils aus einem Schaumzuckerkörper, die dazwischenliegende Lage ist eine Fruchtgummilage. Die Lagen 2 und 3 haben eine abgerundete Form und weisen poröse Oberflächen auf, die dazwischenliegende mittlere Lage 4 ist als langgestreckter Stab ausgebildet und hat die Form eines Frankfurter Würstchens. Die mehreren Lagen (in Fig. 2 sind es bereits fünf Lagen) aus Schaumzucker und/oder Fruchtgummimasse liegen i.w. lose, aber unmittelbar aufeinander. Wenn hier von "i.w. lose" gesprochen wird, so ist damit gemeint, daß ein spielendes Kind die Teile ohne weiteres auseinandernehmen kann, daß aber eine gewisse Vorfixierung, beispielsweise durch eine Zuckerverklebung o.dgl., vorgenommen sein kann. Jedenfalls sollen die Schaumzuckerteile nicht auf die Fruchtgummiteile aufgegossen sein.

Das Bonbon-Spielzeug 1 wird von einer äußeren Umhüllung 10 umgeben, wodurch die Lagen 2-7 in ihrer gegenseitigen Position fixiert sind. Die äußere Umhüllung 10 ist transparent und besteht aus einer verschweißten Klarsichtfolie.

Bei dem in Fig. 2 dargestellten Ausführungsbeispiel, das ein Cheeseburgerimitat darstellt, ist die zweitunterste Lage (Hackfleischscheibe) als flache Scheibe runden Querschnittes ausgebildet, deren Durchmesser etwa dem Durchmesser der untersten Lage 3 entspricht. Geringfügige Abweichungen im Durchmesser sind natürlich, da beim Vorbild, einem echten Cheeseburger, auch Durchmesserabweichungen naturgegeben sind.

Die drittunterste Lage 6 soll eine Käsescheibe darstellen und ist als flache Scheibe i.w. rechteckigen oder quadratischen Querschnittes ausgebildet, wobei die Ecken des Rechteckes oder Quadrates die Peripherie der unteren beiden Scheiben etwas überragen.

Die in Fig. 2 dargestellte weitere Lage 7 aus Fruchtgummimasse wird durch eine flache Scheibe mit einem gezackten Rand 8 gebildet, wobei die Zacken des Randes 8 vorzugsweise die Kanten der darunterliegenden Lage zumindest teilweise überragen. Näheres ergibt sich aus Fig. 2a.

Bei dem in Fig. 2 dargestellten Ausführungsbeipiel ist ferner die Scheibenhöhe der zweituntersten Lage 5 (Hackfleischscheibe) größer als die der darüberliegenden Fruchtgummimasselagen (6, 7) (Käsescheibe, Salatblatt). Die Lagen aus Fruchtgummibonbonmasse (z.B. die Lagen 5, 6 und 7) sollen sich sowohl in Farbe, als auch Geschmacksaromen voneinander abheben, wodurch die Spielmöglichkeiten erweitert werden und die Akzeptanz, insbesondere bei Kindern, verbessert wird.

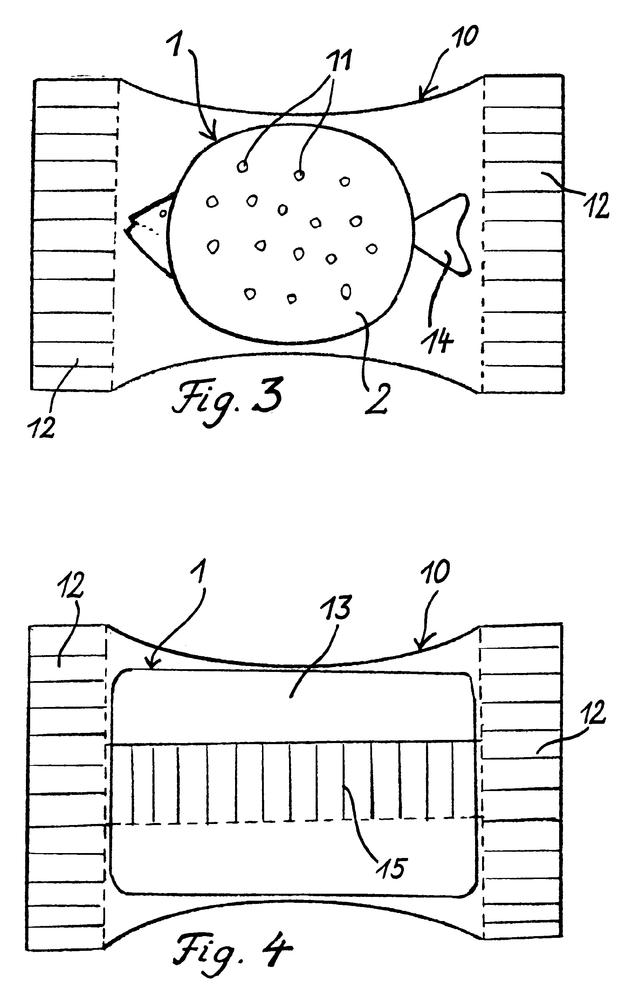

Aus Fig. 2 ist ersichtlich, daß die unterste Scheibe 3 aus Schaumzuckermasse auf ihrer Außenseite (Bodenseite 9) i.w. flach ausgebildet sein soll, aus Fig. 3 ist zu sehen, daß die oberste Lage 2 aus Schaumzuckermasse auf ihrer kuppelförmig ausgebildeten Oberfläche mit noppen artigen Vorsprüngen 11 versehen ist. Die Oberflächen der obersten 2 und untersten Lage 3 weisen offene Poren auf, wodurch eine Brötchenhälfte noch besser imitiert wird.

Bei dem in Fig. 3 dargestellten Ausführungsbeispiel sieht man ferner, daß die Zwischenlage die Form eines liegenden Fisches aufweist, wodurch insgesamt ein Fischbrötchenimitat ergibt.

Aus Fig. 4 ist zu sehen, daß die oberste und unterste Lage auch jeweils aus rechtwinkligen Körpern bestehen können, so daß sich insgesamt ein Sandwich ergibt, das unterschiedlich belegt sein kann.

Aus allen Zeichnungsfiguren geht hervor, daß die Umhüllung 10 durch eine verschweißte Kunststofffolie gebildet wird, wobei endseitige Schweißränder 12 sowie ein mittiger Schweißrand 15 vorliegen, wobei der Schweißrand 15 etwa rechtwinklig zwischen den Schweißrändern 12 verläuft. Für die Umhüllung ist bedeutungsvoll, daß sie sich eng an das Bonbon-Spielzeug anschmiegen soll, da zum einen die innerhalb der Umhüllung vorliegende Luftmasse relativ gering ist (Frischhalteeffekt), zum anderen ein fester Halt der unterschiedlichen Lagen des Bonbon-Spielzeuges aufeinander gewährleistet ist.

## Patentansprüche

1. Bonbon-Spielzeug, insbesondere bestehend aus Schaumzuckermasse und Fruchtgummi, dadurch gekennzeichnet, daß es aus mindestens drei gesonderten Lagen (2, 3, 4) besteht, wobei die oberste (2) und die unterste Lage (3) jeweils aus einem Schaumzuckerkörper abgerundeter Form mit porösen Oberflächen und flachem Querschnitt bestehen sowie die mindestens eine dazwischenliegende Lage (4) als i.w. scheibenförmige oder stabförmige Fruchtgummilage ausgebildet ist.

2. Bonbon-Spielzeug nach Anspruch 1, dadurch gekennzeichnet, daß die mindestens drei Lagen (2, 3, 4), d.h. die oberste und unterste Lage aus Schaumzucker und die mittlere(n) Lage(n) aus Fruchtgummimasse i.w. lose, aber unmittelbar aufeinanderliegen.

3. Bonbon-Spielzeug nach Anspruch 2, dadurch gekennzeichnet, daß die mindestens drei Lagen (2, 3, 4) durch eine äußere Umhüllung (10) in ihrer gegenseitigen Position fixiert sind.

4. Bonbon-Spielzeug nach Anspruch 3, dadurch gekennzeichnet, daß die äußere Umhüllung (10) transparent ist und aus einer verschweißten Klarsichtfolie besteht.

5. Bonbon-Spielzeug nach einem der vorhergehenden Ansprüche, dadurch gekennzeichnet, daß die zweitunterste Lage (5) (Hackfleischscheibe) als flache Scheibe runden Querschnittes ausgebildet ist, deren Durchmesser etwa dem Durchmesser der untersten Lage (3) entspricht.

6. Bonbon-Spielzeug nach einem der vorhergehenden Ansprüche, dadurch gekennzeichnet, daß die drittunterste Lage (6) (Käsescheibe) als flache Scheibe im wesentlichen rechteckigen oder quadratischen Querschnittes ausgebildet ist, wobei die Ecken des Rechtecks oder Quadrates die Peripherie der unteren beiden Scheiben etwas überragen.

7. Bonbon-Spielzeug nach einem der vorhergehenden Ansprüche, dadurch gekennzeichnet, daß eine weitere Lage (7) aus Fruchtgummimasse durch eine flache Scheibe (Salatscheibe) mit einem gezackten Rand (8) gebildet wird, wobei Zacken des Randes (8) vorzugsweise die Kanten der darunterliegenden Lage zumindest teilweise überragen.

8. Bonbon-Spielzeug nach einem der vorhergehenden Ansprüche, dadurch gekennzeichnet, daß die Scheibenhöhe der zweituntersten Lage (5) (Hackfleischscheibe) größer ist als die der darüberliegenden Fruchtgummimasselagen (6, 7) (Käsescheibe, Salatblatt).

9. Bonbon-Spielzeug nach einem der vorhergehenden Ansprüche, dadurch gekennzeichnet, daß die Lagen (z.B. 5, 6, 7) aus Fruchtgummibonbonmasse unterschiedliche Geschmacksaromen enthalten.

10. Bonbon-Spielzeug nach einem der vorhergehenden Ansprüche, dadurch gekennzeichnet, daß die unterste Scheibe (3) aus Schaumzuckermasse auf ihrer Außenseite (Bodenseite 9) flach ausgebildet ist.

11. Bonbon-Spielzeug nach einem der vorhergehenden Ansprüche, dadurch gekennzeichnet, daß die oberste Lage (2) aus Schaumzuckermasse auf ihrer kuppelförmig ausgebildeten Oberfläche mit noppenartigen Vorsprüngen (11) versehen ist.

12. Bonbon-Spielzeug nach einem der vorhergehenden Ansprüche, dadurch gekennzeichnet, daß die Oberflächen der obersten (2) und untersten Lage (3) offene Poren aufweisen.

13. Bonbon-Spielzeug nach einem der vorhergehenden Ansprüche, dadurch gekennzeichnet, daß die oberste (2) und unterste Lage (3) (Brötchenhälften) eine ovale Form haben und die aus Fruchtgummimasse bestehende Zwischenlage (4) als Stab mit abgerundeten Enden (Frankfurter Würstchen) ausgebildet ist.

14. Bonbon-Spielzeug nach einem der vorhergehenden Ansprüche, dadurch gekennzeichnet, daß die oberste (2) und unterste Lage (3) eine ovale Form mit konvexen Oberflächen aufweisen und die Zwischenlage (14) aus Fruchtgummimasse durch einen flachen, im wesentlichen spiegelsymmetrischen Körper variierender Breite (bezogen auf die Kanten des Körpers entlang der Spiegelachse) gebildet ist (Fischbrötchenimitat).

15. Bonbon-Spielzeug nach einem der vorhergehenden Ansprüche, dadurch gekennzeichnet, daß die oberste und unterste Lage durch zwei flache Scheiben (13) rechteckigen oder quadratischen Querschnittes mit im wesentlichen geraden Kanten gebildet sind (Club-Sandwichimitat).

16. Zum Verzehr geeignetes Nahrungsmittel, in Form eines belegten Brotes, Hamburgers, Fischbrötchens, Club-Sandwichs u.dgl., dadurch gekennzeichnet, daß das Nahrungsmittel durch mehrere lose aufeinanderliegende Bonbonscheiben gebildet ist, wobei die die Weißbrot-/Brötchen-Bestandteile imitierenden Lagen (2, 3) aus Schaumzuckerscheiben oder -körpern gebildet sind und die den Belag der Brötchen imitierenden Scheiben (4, 5, 6, 7) (Hamburger-Fleischscheibe, Käsescheibe, Salatblatt, Frankfurter Würstchen, Sardine, Schinkenscheibe u.dgl.) durch Fruchtgummimasse unterschiedlicher, entsprechend angepaßter Ausformung gebildet sind.

## Revendications

1. Bonbon-jouet, constitué notamment d'une masse de sucre glace et de gélatine de fruits, caractérisé en ce qu'il est constitué d'au moins trois couches séparées (2, 3, 4), la couche supérieure (2) et la couche inférieure (3) étant constituées chacune d'un corps en sucre glace de forme arrondie, à surfaces poreuses et section transversale de faible épaisseur, tandis qu'il est prévu au moins une couche intermédiaire (4) qui est réalisée sous la forme d'une couche de gélatine de fruits qui, d'une manière large, est en forme de tranche ou en forme de barre.

2. Bonbon-jouet suivant la revendication 1, caractérisé en ce que les couches (2, 3, 4), prévues au moins au nombre de trois, à savoir la couche supérieure et la couche inférieure en sucre glace et la ou les couches intermédiaires formées d'une masse de gélatine de fruits, reposent librement, d'une manière large, l'une au-dessus de l'autre, mais sans séparation.

3. Bonbon-jouet suivant la revendication 2, caractérisé en ce que les couches (2, 3, 4), prévues au moins au nombre de trois, sont immobilisées dans leurs positions respectives au moyen d'une enveloppe extérieure (10).

4. Bonbon-jouet suivant la revendication 3, caractérisé en ce que l'enveloppe extérieure (10) est transparente et est constituée d'une pellicule transparente soudée.

5. Bonbon-jouet suivant l'une des revendications précédentes, caractérisé en ce que la couche (5) qui est la seconde à partir du bas (tranche de viande hâchée) est réalisée sous la forme d'une tranche de faible épaisseur, à section transversale circulaire, dont le diamètre correspond approximativement au diamètre de la couche inférieure (3).

6. Bonbon-jouet suivant l'une des revendications précédentes, caractérisé en ce que la couche (6) qui est la troisième à partie du bas (tranche de fromage) est réalisée sous la forme d'une tranche de faible épaisseur à section transversale pratiquement rectangulaire ou carrée, les coins du rectangle ou du carré dépassant légèrement du contour périphérique des deux tranches situées au-dessous.

7. Bonbon-jouet suivant l'une des revendications précédentes, caractérisé en ce qu'une autre couche (7) constituée d'une masse de gélatine de fruits est réalisée sous la forme d'une tranche de faible épaisseur à bord dentelé (8) (feuille de salade), les dentelures du bord (8) dépassant de préférence au moins en partie des bords de la couche se trouvant au-dessous.

8. Bonbon-jouet suivant l'une des revendications précédentes, caractérisé en ce que l'épaisseur de tranche de la couche (5) qui est la deuxième à partir du bas (tranche de viande hâchée) est supérieure à celle des couches (6, 7) constituées d'une masse de gélatine de fruits (tranche de fromage, feuille de salade) qui se trouvent au-dessus.

9. Bonbon-jouet suivant l'une des revendications précédentes, caractérisé en ce que les couches (par exemple 5, 6, 7) constituées d'une masse de gélatine de fruits possèdent des arômes gustatifs différents.

10. Bonbon-jouet suivant l'une des revendications précédentes, caractérisé en ce que la tranche inférieure (3) constituée d'une masse de sucre glace a une forme plane sur sa face extérieure (face de base 9).

11. Bonbon-jouet suivant l'une des revendications précédentes, caractérisé en ce que, sur sa surface en forme de dôme, la couche supérieure (2) constituée d'une masse de sucre glace est pourvue de saillies (11) en forme de tétons.

12. Bonbon-jouet suivant l'une des revendications précédentes, caractérisé en ce que les surfaces de la couche supérieure (2) et de la couche inférieure (3) comportent des alvéoles ouverts.

13. Bonbon-jouet suivant l'une des revendications précédentes, caractérisé en ce que la couche supérieure (2) et la couche inférieure (3) (moitiés de petit pain) ont une forme ovale et en ce que la couche intermédiaire (4) constituée d'une masse de gélatine de fruits est réalisée sous la forme d'une barre à extrémités arrondies (saucisse de Francfort).

14. Bonbon-jouet suivant l'une des revendications précédentes, caractérisé en ce que la couche supérieure (2) et la couche inférieure (3) comportant une forme ovale à surfaces convexes et en ce que la couche intermédiaire (14) constituée d'une masse de gélatine de fruits est formée d'un corps de faible épaisseur, essentiellement symétrique par rapport à un plan et d'une largeur qui varie (par rapport aux bords du corps disposés le long de l'axe de symétrie) (imitation de sandwich au poisson).

15. Bonbon-jouet suivant l'une des revendications précédentes, caractérisé en ce que la couche supérieure et la couche inférieure sont constituées de deux tranches de faible épaisseur (13) à section transversale rectangulaire ou carrée et à bords essentiellement rectilignes (imitation de sandwich club).

16. Produit alimentaire apte à la consommation, se présentant sous la forme d'un pain garni, hamburger, sandwich au poisson, sandwich club ou analogue, caractérisé en ce que le produit alimentaire est constitué de plusieurs tranches de bonbon disposées librement l'une au-dessus de l'autre, les couches (2, 3) imitant les constituants du petit pain/pain blanc étant formées de tranches ou corps en sucre glace et les tranches (4, 5, 6, 7) imitant la garniture des petits pains (tranche de viande d'hamburger, tranche de fromage, feuille de salade, saucisse de Francfort, sardine, tranche de jambon et analogues) étant constituées d'une masse de gélatine de fruits d'une conformation différente adaptée en conséquence.

## Claims

1. Sweet-toy, in particular comprising a foamed sugar mass and fruit gum, characterised in that it consists of at least three individual layers (2, 3, 4), wherein the uppermost layer (2) and the bottom layer (3) consist in each case of a foamed sugar body which has a rounded shape with porous surfaces and a flat cross-section, and the intermediate layer (4), of which there is at least one, is formed as a substantially disc-shaped or rod-shaped fruit gum layer.

2. Sweet-toy according to claim 1, characterised in that the layers (2, 3, 4), of which there are at least three, i.e. the uppermost and bottom layer of foamed sugar and the intermediate layer(s) of fruit gum mass, are superimposed in a substantially loose yet direct manner.

3. Sweet-toy according to claim 2, characterised in that the layers (2, 3, 4), of which there are at least three, are fixed in their mutual position by an outer cover (10).

4. Sweet-toy according to claim 3, characterised in that the outer cover (10) is transparent and consists of a heat-sealed transparent film.

5. Sweet-toy according to any one of the preceding claims, characterised in that the second layer (5) from the bottom ("minced meat layer") is formed as a flat disc having a circular cross-section of which the diameter corresponds approximately to the diameter of the bottom layer (3).

6. Sweet-toy according to any one of the preceding claims, characterised in that the third layer (6) from the bottom ("cheese slice") is formed as a flat slice having a substantially rectangular or quadratic cross-section, wherein the corners of the rectangle or square project somewhat over the periphery of the two lower slices.

7. Sweet-toy according to any one of the preceding claims, characterised in that a further layer (7) of a fruit gum mass is formed by a flat slice ("lettuce leaf") with a serrated edge (8), wherein in an advantageous manner points of the edge (8) project at least partially over the edges of the layers below.

8. Sweet-toy according to any one of the preceding claims, characterised in that the height of the slice of the second layer (5) from the bottom ("minced meat layer") is greater than the heights of the fruit gum mass layers (6, 7) ("cheese slice", "lettuce leaf") which lie thereabove.

9. Sweet-toy according to any one of the preceding claims, characterised in that the layers (5, 6, 7 for example) of fruit gum sweet mass contain different flavours.

10. Sweet-toy according to any one of the preceding claims, characterised in that the bottom slice (3) of foamed sugar mass is constructed such that it is flat on its outer side (bottom side 9).

11. Sweet-toy according to any one of the preceding claims, characterised in that the uppermost layer (2) of foamed sugar mass is provided on its dome-shaped surface with pimple-like projections (11).

12. Sweet-toy according to any one of the preceding claims, characterised in that the surfaces of the uppermost layer (2) and bottom layer (3) comprise open pores.

13. Sweet-toy according to any one of the preceding claims, characterised in that the uppermost layer (2) and bottom layer (3) ("roll halves") have an oval shape and the intermediate layer (4), which consists of fruit gum mass, is formed as rod with rounded ends ("Frankfurters").

14. Sweet-toy according to any one of the preceding claims, characterised in that the uppermost layer (2) and bottom layer (3) have an oval shape with convex surfaces and the intermediate layer (14) of fruit gum mass is formed by a flat, substantially mirror-symmetrical body of varying width (with respect to the edges of the body along the axis of reflection) (imitating a fish roll).

15. Sweet-toy according to any one of the preceding claims, characterised in that the uppermost layer and bottom layer are formed by two flat slices (13) which have a rectangular or quadratic cross-section with substantially straight edges (imitating a club sandwich).

16. Food suitable for consumption, in the form of a filled roll, hamburger, fish roll, club sandwich and the like, characterised in that the food is formed by a plurality of sweet layers which are superimposed in a loose manner, wherein the layers (2, 3) which imitate the white bread-/roll components are formed of foamed suger layers or bodies and the slices (4, 5, 6, 7) (hamburger-meat layer, cheese slice, lettuce leaf, Frankfurter, sardine, ham slice etc.) which imitate the roll filling are formed of fruit gum mass of different and correspondingly adapted formation.

Fig. 1

Fig. 2

Fig. 2a

Fig. 3

Fig. 4